(19) Europäisches Patentamt
European Patent Office
Office européen des brevets

(11) EP 3 822 733 A1

(12) EUROPEAN PATENT APPLICATION

(43) Date of publication:
19.05.2021 Bulletin 2021/20

(51) Int Cl.:
G05D 1/10 (2006.01)       G05D 1/12 (2006.01)
F41G 3/00 (2006.01)

(21) Application number: 19275124.6

(22) Date of filing: 15.11.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MBDA UK Limited
Stevenage, Hertfordshire SG1 2DA (GB)

(72) Inventor: The designation of the inventor has not
yet been filed

(74) Representative: BAE SYSTEMS plc
Group IP Department
Warwick House
P.O. Box 87
Farnborough Aerospace Centre
Farnborough Hampshire GU14 6YU (GB)

(54) METHODS OF CONTROLLING SELF-PROPELLED FLYING DEVICES

(57)    A method of controlling a self-propelled flying device that seeks a target. A desired time to reach the target is obtained. The position of the target is acquired. A bias value is calculated, and the flight of the device towards the target is adjusted for a period of time using the bias value. The bias value is calculated so that the device reaches the target at the desired time.

Fig. 1

**Description**

Field of the Invention

The present invention concerns methods of controlling self-propelled flying devices. More particularly, but not exclusively, the invention concerns controlling a self-propelled flying device that seeks a target so that it reaches the target at a desired arrival time.

Background of the Invention

It can be desirable to control the arrival time at which a self-propelled flying device, such as a missile, reaches its target. A key application is to control the arrival time of multiple missiles, so that they all reach the target at the same time, or at specified intervals, to maximise their effect. However, it can also be desirable to control the arrival time of a single missile or other self-propelled flying device.

While the arrival time can be controlled simply by controlling the time at which a device is launched, unintended effects such as launch positions/time errors, environmental conditions and non-nominal device performance can cause significant inaccuracies in arrival time.

It is common for self-propelled flying devices such as missiles to have a control based upon proportional navigation (PN). PN is a well-known guidance law that is based upon the fact that when a device is on a collision course with a target, the direct line-of-sight of the device to the target does not change direction as the device approaches the target. PN requires that the velocity vector of the device rotates at a rate proportional to, and in the same direction as, the line-of-sight.

Proposed system to control the arrival time of a device that is controlled using PN have been considered, for example in Cooperative Guidance for Multimissile Salvo Attack, Zhao S et al, Chinese Journal of Aeronautics, December 2008; Robust Cooperative Guidance Law for Simultaneous Arrival, Li Z et al, IEEE Transactions on Control Systems Technology, May 2019; Distributed cooperative guidance for multiple missiles with fixed and switching communication topologies, Zhao Q et al, Chinese Journal of Aeronautics, August 2017; and Three-dimensional cooperative guidance laws against stationary and maneuvering targets, Zhao J et al, Chinese Journal of Aeronautics, August 2015. However, the problem is simplified to a two-dimensional system and/or using unrealistic assumptions such as that velocity is constant. Consequently, such proposals cannot be implemented in a real-life system. Another example is in A Three-Dimensional Cooperative Guidance Law of Multimissile System, Wei X et al, International Journal of Aerospace Engineering, September 2015, which uses an artificial neural network which is trained using machine learning. However, this solution is complicated, and the training time for the artificial neural network can be slow to obtain acceptable accuracy. A common aspect to all these proposed systems is that the arrival time is varied by adjusting the PN guidance coefficient.

The present invention seeks to solve and/or mitigate some or all of the above-mentioned problems. Alternatively or additionally, the present invention seeks to provide improved methods of controlling a self-propelled flying device and improved methods of controlling a plurality of self-propelled flying devices.

Summary of the Invention

In accordance with a first aspect of the invention there is provided a method of controlling a self-propelled flying device that seeks a target, the method comprising the steps of:

obtaining a desired arrival time for the device to reach the target;
acquiring the position of the target;
calculating a bias value; and
adjusting the flight of the device towards the target for a period of time using the bias value;
wherein the bias value is calculated so that the device reaches the target at the desired arrival time.

By having the flight of the device towards the target adjusted by a bias value, the path of the device to the target is lengthened, as the bias value effectively adds curvature to the path of the missile. The longer path takes the device a greater amount of time to travel. Thus, by selecting an appropriate bias value, the device can be made to reach the target at the desired arrival time.

Advantageously, the flight of the device is controlled by adjusting the rate of change of the device's sightline to the target, and wherein the sightline rate is adjusted by the bias value. A device's sightline rate is adjusted to control its flight in common flight control methods such as proportional navigation. In this case, the bias value can preferably, and advantageously, be applied to the sightline rate. When this is done, rather than flying directly towards the target, the device will fly at an angle away from the direction of the target, where the angle is proportionate to magnitude of the bias value.

Alternatively, the flight of the device towards the target may be adjusted by adjusting the acquired position of the target by the bias value. In other words, rather than the bias value being used to change the angle of flight of the device, instead it is used to change the positon the device flies towards to one distant from the actual target (though this necessarily also changes the angle of flight of the device, of course). It will be appreciated that the bias value could be used to adjust the flight of the device in various other appropriate ways.

Preferably, the device is arranged to seek the target using proportional navigation. Advantageously, the device is arranged to seek the target using generalised explicit guidance (GENEX). GENEX is an extension of PN that allows the angle of impact of the device at arrival to be specified. It is advantageous that the method can also be used when GENEX guidance is used, unlike known methods.

Preferably, the period of time during which the flight of the device towards the target is adjusted by the bias value begins when the devices acquires the position of the target. Alternatively, the period of time may begin before or after the target is acquired.

Preferably, the period of time during which the flight of the device towards the target is adjusted by the bias value ends when the device is a predetermined distance from the target. Alternatively, the period of time during which the flight of the device towards the target is adjusted by the bias value ends a predetermined length of time before the desired time to reach the target. In each case, by stopping using the bias value a certain distance or time before the target is reached, the travel of the device once the bias value is no longer used becomes directly towards the target, and so the target is not missed (or can be reached to within a desired distance) due to the use of the bias value.

Advantageously, the bias value is determined using the Newton-Raphson method.

The device may be a missile. Alternatively, the device may be a drone or any other suitable flying device.

In accordance with a second embodiment of the invention there is provided a method of controlling a plurality of self-propelled flying devices that seek a target, wherein each device of the plurality of devices is controlled using a method as claimed in any preceding claim, the method comprising the steps of:

for each device of the plurality of devices, determining an earliest time the device could reach the target and a latest time the device could reach the target;
determined a desired arrival time for each device of the plurality of devices to reach the target, wherein each desired arrival time is between the earliest time and latest time for the device; and
providing each device of the plurality of devices with the desired arrival time to reach the target.

By determining a desired arrival time for each device, a plurality of devices can be coordinated. This is particularity advantageous as the desired arrival time for each device can be determined based on its earliest and latest possible arrival times.

The desired arrival time for each device of the plurality of devices may be the same. Alternatively, desired arrival time for some or all of the devices may be different. This allows, for example, the device arrival times to be staggered at intervals. Where the devices are missiles, this can increase their effect.

Preferably, the earliest time for each device of the plurality of devices is the estimated time to reach the target when no bias value is used.

Preferably, the latest time for each device of the plurality of devices is the estimated time to reach the target when the maximum bias value is used for which the device is able to maintain sight of the target. This gives a latest arrival time which still allows the device to reliably reach the target, as during flight does not lose sight of the target. A device may maintain sight of a target by means of sensors mounted on a gimbal or the like, and so in that case the ability to maintain sight would depend upon the freedom of movement of the gimbal.

Preferably, the maximum bias value is determined using the Newton-Raphson method.

Advantageously, the desired times to reach the target are determined using a Laplacian matrix.

In accordance with a third embodiment of the invention there is provided a self-propelled flying device arranged to seek a target in accordance with any of the methods described above.

The self-propelled flying device may be a missile, or any other suitable flying device.

In accordance with a fourth embodiment of the invention there is provided a computer program product arranged, when executed by a computer processor of a self-propelled flying device, controls the self-propelled flying device to seek a target in accordance with any of the methods described above.

In accordance with a fifth embodiment of the invention there is provided a system comprising a plurality of self-propelled flying devices arranged to seek a target according to any of the methods described above.

Each self-propelled flying device may be a missile, or any other suitable flying device.

It will of course be appreciated that features described in relation to one aspect of the present invention may be incorporated into other aspects of the present invention. For example, the method of the invention may incorporate any of the features described with reference to the apparatus of the invention and *vice versa.*

Description of the Drawings

Embodiments of the present invention will now be described by way of example only with reference to the accompanying schematic drawings of which:

Figure 1 shows a missile in accordance with a first embodiment of the invention;
Figure 2 is a flow chart showing a control method for the missile of Figure 1;
Figure 3 is a flow chart showing a method of calculating a bias value used by the control method of Figure 2;
Figure 4 is a flow chart showing a control method in accordance with a second embodiment of the invention;
Figure 5 is a flow chart showing a method of selecting an arrival time used by the control method of Figure 2; and
Figure 6 shows a simulation of the flight of missiles accordance with the control method of Figure 4.

Detailed Description

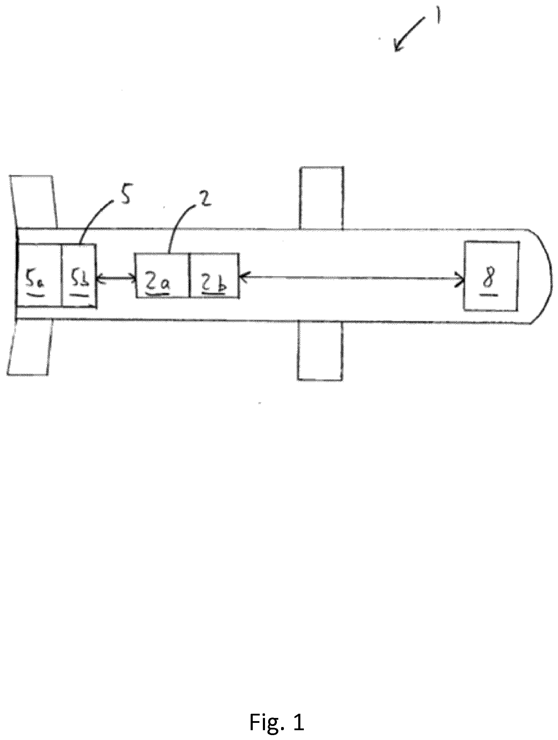

A missile in accordance with a first embodiment of the invention is now described, with reference to Figures 1 to 3. The missile 1 comprises a control system 2, which comprises a processor 2a and memory 2b. The control system 2 is in communication with flight system 5 comprising an engine 5a and steering system 5b. The control system 2 is also in communication with a target detection system 8 comprising sensors such as radar. In this way, the control system 2 is able to acquire the position of a target using the target detection system 8, and control the movement of the missile 1 to intercept the target using the flight system 5.

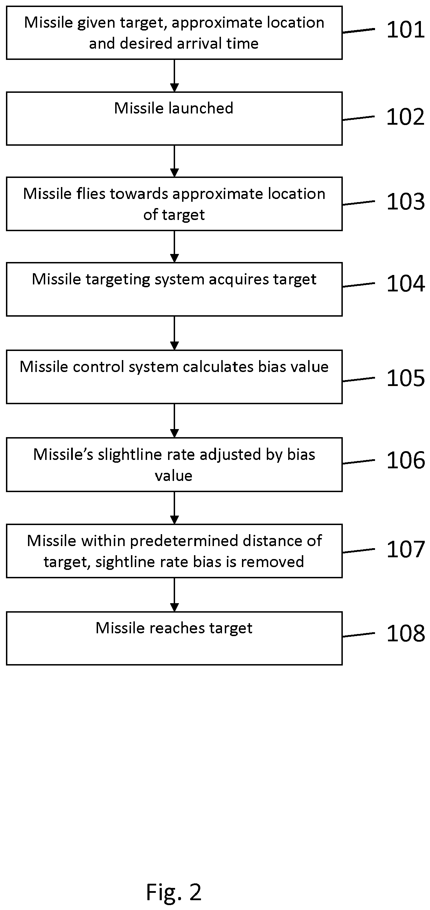

The control of the flight of the missile 1 in accordance with a first embodiment of the invention is now described with reference to the flow chart of Figure 2. First, the missile 1 is provided with a target, an approximate location of the target, and a desired arrival time to reach the target (step 101). These are provided by the missile system launching the missile 1. The missile 1 is then launched (step 102).

Following launch, the flight system 5 of the missile 1 is initially controlled by the control system 2 to fly towards the approximate location of the target (step 103). The control system 2 implements generalised explicit guidance (GENEX) flight control, which is based upon proportional navigation (PN). The control system 2 uses the approximate location of the target as the target position for the PN.

After a period of time, the target detection system 8 will acquire the target (step 104), i.e. be able to sense it using its sensors and identify its actual position. The control system 2 then calculates a bias value (step 105) that allows the missile 1 to reach the target at the desired time, as described in more detail below. The control system 2 then controls the flight system 2, again using GENEX guidance law, but with the sightline rate measurement of the missile 1 adjusted by the calculated bias value (step 106). This affects the path of the missile 1 towards the target, and so accordingly affects the time it takes the missile 1 to approach the target.

Once the missile 1 is within a predetermined distance of the target, the control system 2 controls the flight system 2 to remove the sightline rate bias (step 107). Once this has occurred the missile 1 then approaches the target by the optimal path, and in due course reaches the target (step 108).

With the method described above, the use of bias value allows the time it takes for the missile 1 to reach the target to be controlled, as effectively the bias value adds curvature to the path of the missile 1 to the target, so increases its length and so the time it takes the missile 1 to travel to the target. By selecting an appropriate bias value, the missile 1 reaches the target at the desired arrival time. However, by stopping using the bias value at a predetermined distance from the target, the missile 1 is able to correct its travel so that it reaches the target, to within a desired distance at least. (If the bias value were maintained, the missile 1 would miss the target, of course.)

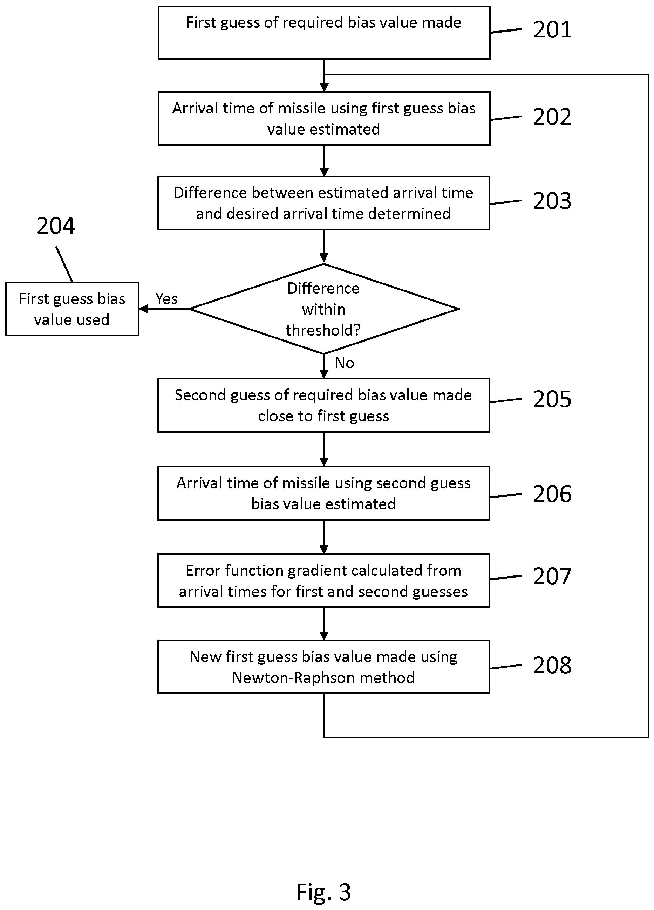

The calculation of the bias value in step 105 is now described with reference to the flow chart of Figure 3. First, the control system 2 of the missile 1 makes a first guess of the required bias value (step 201), and calculates using a fast-flyout model the estimated arrival time of the missile 1 at the target (step 202). A fast-flyout model predicts the trajectory forward in time of the missile 1 to the target, in order to numerically calculate the time of impact. A numerical approach is required (or at least preferable) as the relationship between the properties of the missile's flight to the target and the arrival time of the missile is highly non-linear and therefore extremely difficult to determine analytically.

The difference between the estimated arrival time and the desired arrival time is determined (step 203). If the guessed bias value gives an estimated arrival time within a required threshold of the desired arrival time, the bias value is used as the required bias value (step 204) for the control method shown in Figure 2.

If the estimated arrival time is not within the required threshold, the control system 2 then makes a second guess of the required bias value close to the first guess (step 205), and again calculates the estimated arrival time of the missile 1 at the target (step 206).

The estimated arrival times for the first and second guesses are then used to calculate the gradient of the error function (step 207), i.e. the function of the difference between the estimated arrival time and the desired arrival time. This estimated gradient can then be used with the well-known Newton-Raphson method to determine a new first guess for the bias value (step 208), and the previous steps (steps 202 onwards) are then repeated using that new guess. As the Newton-Raphson algorithm has quadratic convergence, and it has been shown through testing that the error curve will always be convex and therefore should always successfully converge, a bias value within the required threshold is rapidly obtained.

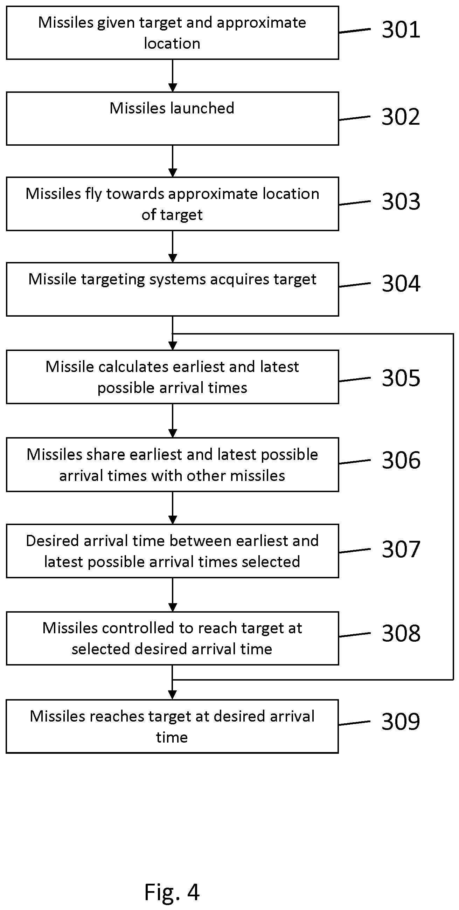

The control of the flight of a plurality of missiles 1a to 1b in accordance with a second embodiment of the invention is now described with reference to the flow chart of Figure 4. Each missile 1a to 1b is of the same type as the missile 1 of Figure 1.

Similarly to the first embodiment, first the missiles 1a to 1b are provided with a target and an approximate location for the target (step 301). However, the missiles 1a to 1d are not given a desired arrival time. The missiles 1a to 1d are then launched (step 302). Following launch, the missiles 1a to 1d are initially controlled fly towards the approximate location of the target (step 303). After a period of time, the target detection system of each missile 1a to 1d will acquire the target (step 304).

Each missile 1a to 1d then calculates an earliest time it could reach the target and a latest time it could reach the target (step 305). The earliest time is determined as the time it would take a missile to reach the target with no bias value being used. The latest time is determined as the time it would take a missile to reach the target if the maximum possible bias value was used.

The maximum possible bias value is the greatest bias value that still allows the target to be seen by the targeting system of a missile. When a bias value is used, this causes the missile to be angled away from the target. The sensors of the targeting system are generally mounted on a gimbal, allowing them a degree of freedom of movement to be pointed in a direction away from the direction of flight of the missile. Thus, the maximum bias value will depend on the freedom of movement of the gimbal. The maximum bias value can again be calculated iteratively using the Newton-Raphson method, but in this case with the error function being defined as the difference between the maximum look angle on the estimated path of travel (i.e. the angle between the direction of travel of the missile and direction of the target) and the gimbal limit angle of the targeting system (i.e. the freedom of movement of the gimbal).

Each of the missiles 1a to 1d then shares its earliest and latest possible arrival times with the other missiles (step 306). The missiles 1a to 1d then select between them a desired arrival time to reach the target (step 307) from amongst the shared earliest and latest possible arrival times, as described in more detail below. The desired arrival time is between the earliest time and latest time for each of the missiles 1a to 1d. Each of the missiles 1a to 1d then uses this desired arrival time with the method of the first embodiment described above (step 308), so that each of the missiles 1a to 1d arrives at the target at the same time (step 309), namely the selected desired arrival time.

During flight the steps 305 to 308 can be repeated, as shown by the line looping from step 308 back to step 306, so that if there are any unexpected changes in the system, for example environmental conditions affecting possible arrival times, each of the missiles 1a to 1d can recalculate its earliest and latest possible arrival times and these used to select a new desired arrival time for each of the missiles 1a to 1d to use.

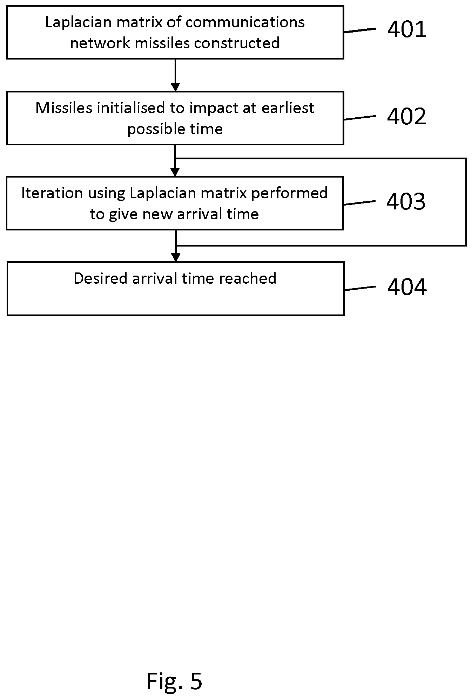

The selection of the desired arrival time in step 307 is now described with reference to the flow chart of Figure 5. First, a Laplacian matrix L is constructed that describes the topology of the communications network between the missiles 1a to 1d (step 401). The Laplacian matrix L is constructed from an adjacency matrix A, for which each row corresponds to one of the missiles 1a to 1d, similarly each column corresponds to one of the missiles 1 a to 1d. The adjacency matrix A is formulated by placing a 1 in the matrix entry where the missile in column j receives a message from the missile in row i. A degree matrix D is then constructed from the adjacency matrix A. The degree matrix D is a diagonal matrix (i.e. it has zeros everywhere except on its diagonal), and each diagonal corresponds to the sum of the entries in the corresponding row of the adjacency matrix A. The Laplacian matrix is then the adjacency matrix A minus the degree matrix D. So for example, in a system of three missiles, in which the first and second missiles can send messages to each other, the third missile can send messages to the second missile, and no other sending of missiles is possible, the three matrices will be as follows:

$$A = \begin{bmatrix} 0 & 1 & 0 \\ 1 & 0 & 1 \\ 0 & 0 & 0 \end{bmatrix} \Rightarrow D = \begin{bmatrix} 1 & & \\ & 2 & \\ & & 0 \end{bmatrix} \Rightarrow L = \begin{bmatrix} 1 & -1 & 0 \\ -1 & 2 & -1 \\ 0 & 0 & 0 \end{bmatrix}$$

The Laplacian matrix L is then used to calculate a new desired arrival time for each of the missiles 1a to 1d as follows, using the following equation:

$$\vec{T}_{k+1} = (I_n - CL)\vec{T}_k$$

where $\vec{T}_X$ is a column vector of $t_{des}^i$ values at the $X^{th}$ iteration, $I_n$ is the [$n \times n$] identity matrix, $n$ is the number of missiles in the system, and $C$ is the gain matrix with all off-diagonal terms equal to 0.

First, each of the missiles 1a to 1d is initialised with an arrival time equal to its earliest arrival time (step 402), i.e. with no bias value used at all. This is done by setting the initial $t_{des}^i$ value for each of the missiles 1a to 1d to be equal to its earliest arrival time $t_{min}^i$.

The equation above is then iterated (step 403), to give a new arrival time for each of the missiles 1a to 1d. The iteration is repeated until the desired arrival time for each of the missiles 1a to 1d is reached (step 404).

The desired arrival time for each of the missiles 1a to 1d is (if possible) a common arrival time, i.e. the same for each of the missiles 1a to 1d. By setting the initial $t_{des}^i$ value for each of the missiles 1a to 1d to be equal to its earliest arrival time $t_{min}^i$, there is convergence of $t_{des}^i$ at the latest $t_{min}^i$ time. This results in the selected impact time being the earliest possible time, with each of the missiles 1a to 1d taking the shortest possible path which allows for synchronised arrival. This maintains as much speed as possible in the arrival phase, minimising miss distance and maximising the effect of the missiles 1a to 1d.

If there is no common overlap between admissible arrival times, i.e. the same arrival time for each of the missiles 1a to 1d is not possible, the system will nevertheless aim to reduce the overall error (i.e. difference) in arrival times. For example, in a system with three missiles and earliest and latest arrival times as follows, missile A and missile C have no possible overlap.

| Missile | Earliest arrival time | Latest arrival time |
| --- | --- | --- |
| A | 40 | 60 |
| B | 50 | 80 |
| C | 70 | 100 |

In this case, the arrival time for missile A will converge upon 60 (the latest possible), the arrival time for missile C will converge upon 70 (the earliest possible), and the arrival time for missile A will converge upon 65 (partway between the arrival times of the others, to minimise the overall error).

The Laplacian matrix can be used to determine offset arrival times. In other words, instead of requiring all missiles to hit simultaneously, a defined interval between the impact times of each missile can be specified. To achieve this, the following equation is used:

$$\vec{T}_{k+1} = \vec{T}_k - CL\{\vec{T}_k - \vec{t}_{offset}\},$$

where $\vec{t}_{offset}$ is a column vector defining the inter-missile impact time offsets. For example, using a four-missile system with a one-second offset between arrival times, $\vec{t}_{offset}$ is as follows:

$$\vec{t}_{offset} = \begin{bmatrix} 0 & 1 & 2 & 3 \end{bmatrix}'$$

When this is done, the values of $t_{des}^i$ converge to required values.

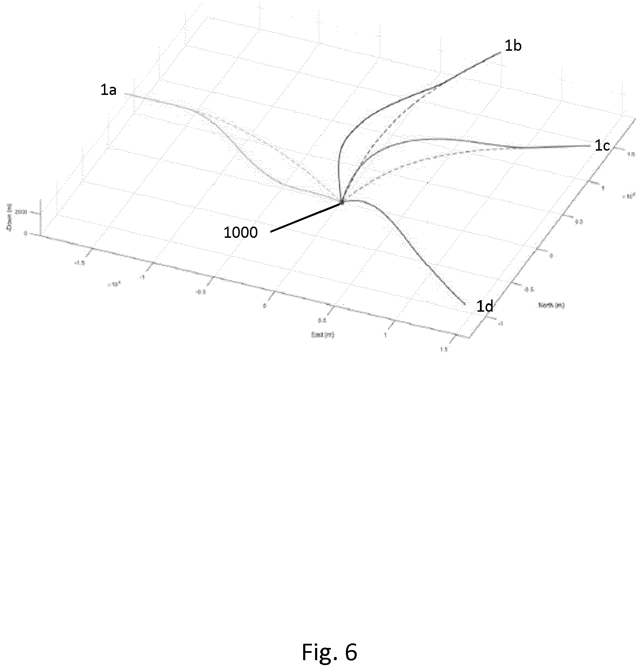

A simulation showing the flight of the missiles 1a to 1d to a target 1000 in accordance with the control method of Figure 4 is shown in Figure 6. The dotted lines show the flight of the missiles 1a to 1d if no bias values were used, and the solid lines show the flight of the missiles 1a to 1d using bias values. As can be seen, the use of the bias values causes an increased curve in the paths of the missiles 1a to 1d, so increases the time each takes to reach the target 1000. It can also be seen that, once the missiles 1a to 1d are within a certain distance of the target 1000, their paths change to be directly towards the target 1000, i.e. without any bias value. Thus, it can be seen that the selection of appropriate bias values for each of the missiles 1a to 1d allows the time they reach the target 1000 to be synchronised. In addition, stopping using the bias values within a certain distance of the target 1000, each of the missiles 1a to 1d does in fact reach the target 1000, and is not caused by the bias value to miss.

While the present invention has been described and illustrated with reference to particular embodiments, it will be appreciated by those of ordinary skill in the art that the invention lends itself to many different variations not specifically illustrated herein. By way of example only, certain possible variations will now be described.

Rather than adjusting the device's sightline to the target by the bias value, instead the positon towards which the device is flying could be adjusted by the bias value, i.e. to make the device fly towards a positon distant from the target by the bias value. It will be appreciated that the bias value could be used to adjust the flight of the device in various other appropriate ways.

When estimating the arrival time for a device for a particular the bias value, in order to determine the required bias value, it can be assumed that a device will stop using the bias value at a predetermined distance from the target. Alternatively it can be assumed that a device will stop using the bias value at a predetermined time from reaching the target. When using the bias value in actual flight, the device can stop using the bias value at the predetermined distance or time respectively. However, it will be appreciated that the stopping using the bias value could be handled in various other ways that would still be in accordance with the invention. Whichever way was used, including using a predetermined distance or time, the device could calculate in flight an appropriate point at which to stop using the bias value so as to reach the target at the desired time. This allows unintended conditions during flight to be compensated for, for example unexpectedly fast or slow travel to the target due to the effect of environmental conditions.

While the estimation of the arrival time has been disclosed as being done used a fast-flyout model, any other suitable method could be used, for example an offline-trained artificial neural network.

Where there are multiple devices, rather than all devices having the same desired arrival time, different devices could have different desired arrival times. For example, the desired arrival times could be staggered at specified intervals. The desired arrival time for a device would be between the earliest and latest arrival time for that device, of course, and could be between the earliest and latest arrival times for all or some of the devices.

The earliest and latest arrival times for a device could be determined when it has acquired the target, or only once some or all devices had acquired the target. Similarly, the desired arrival times for the devices could be determined only once all devices had acquired the target, or after a certain number had or after a certain amount of time, so that the failure of one or more devices to acquire the target did not prevent the method being used.

The device or devices could be any other appropriate flying device other than a missile, for example a drone.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Claims**

1. A method of controlling a self-propelled flying device that seeks a target, the method comprising the steps of:

> obtaining a desired arrival time for the device to reach the target;
> acquiring the position of the target;
> calculating a bias value; and
> adjusting the flight of the device towards the target for a period of time using the bias value;

wherein the bias value is calculated so that the device reaches the target at the desired arrival time.

2. A method as claimed in claim 1, wherein the flight of the device is controlled by adjusting the rate of change of the device's sightline to the target, and wherein the sightline rate is adjusted by the bias value.

3. A method as claimed in claim 1, wherein the flight of the device towards the target is adjusted by adjusting the acquired position of the target by the bias value.

4. A method as claimed in any preceding claim, wherein the device is arranged to seek the target using proportional navigation.

5. A method as claimed in claim 4, wherein the device is arranged to seek the target using generalised explicit guidance (GENEX).

6. A method as claimed in any preceding claim, wherein the period of time during which the flight of the device towards the target is adjusted by the bias value begins when the devices acquires the position of the target.

7. A method as claimed in any preceding claim, wherein the bias value is determined using the Newton-Raphson method.

8. A method of controlling a plurality of self-propelled flying devices that seek a target, wherein each device of the plurality of devices is controlled using a method as claimed in any preceding claim, the method comprising the steps of:

for each device of the plurality of devices, determining an earliest time the device could reach the target and a latest time the device could reach the target;
determined a desired arrival time for each device of the plurality of devices to reach the target, wherein each desired arrival time is between the earliest time and latest time for the device; and
providing each device of the plurality of devices with the desired arrival time to reach the target.

9. A method as claimed in claim 8, wherein the desired arrival time for each device of the plurality of devices is the same.

10. A method as claimed in claim 8 or 9, wherein the earliest time for each device of the plurality of devices is the estimated time to reach the target when no bias value is used.

11. A method as claimed in claim 8 to 10, wherein the latest time for each device of the plurality of devices is the estimated time to reach the target when the maximum bias value is used for which the device is able to maintain sight of the target.

12. A self-propelled flying device arranged to seek a target in accordance with any of the methods of claims 1 to 11.

13. A self-propelled flying device as claimed in claim 12, wherein the self-propelled flying device is a missile.

14. A computer program product arranged, when executed by a computer processor of a self-propelled flying device, controls the self-propelled flying device to seek a target in accordance with any of the methods of claims 1 to 16.

15. A system comprising a plurality of self-propelled flying devices arranged to seek a target according to any of the methods of claims 11 to 16, wherein each self-propelled flying device of the plurality of self-propelled flying devices is a missile.

Fig. 1

| Missile given target, approximate location and desired arrival time | — 101 |
| Missile launched | — 102 |
| Missile flies towards approximate location of target | — 103 |
| Missile targeting system acquires target | — 104 |
| Missile control system calculates bias value | — 105 |
| Missile's slightline rate adjusted by bias value | — 106 |
| Missile within predetermined distance of target, sightline rate bias is removed | — 107 |
| Missile reaches target | — 108 |

Fig. 2

First guess of required bias value made — 201

Arrival time of missile using first guess bias value estimated — 202

Difference between estimated arrival time and desired arrival time determined — 203

204

First guess bias value used ←Yes— Difference within threshold?

↓No

Second guess of required bias value made close to first guess — 205

Arrival time of missile using second guess bias value estimated — 206

Error function gradient calculated from arrival times for first and second guesses — 207

New first guess bias value made using Newton-Raphson method — 208

Fig. 3

| Missiles given target and approximate location | — 301 |

| Missiles launched | — 302 |

| Missiles fly towards approximate location of target | — 303 |

| Missile targeting systems acquires target | — 304 |

| Missile calculates earliest and latest possible arrival times | — 305 |

| Missiles share earliest and latest possible arrival times with other missiles | — 306 |

| Desired arrival time between earliest and latest possible arrival times selected | — 307 |

| Missiles controlled to reach target at selected desired arrival time | — 308 |

| Missiles reaches target at desired arrival time | — 309 |

Fig. 4

```
┌─────────────────────────────────────┐
│  Laplacian matrix of communications  │ ── 401
│     network missiles constructed     │
└─────────────────────────────────────┘
                    │
                    ▼
┌─────────────────────────────────────┐
│  Missiles initialised to impact at   │ ── 402
│        earliest possible time        │
└─────────────────────────────────────┘
                    │
                    ▼
┌─────────────────────────────────────┐
│ Iteration using Laplacian matrix      │ ── 403
│    performed to give new arrival time │
└─────────────────────────────────────┘
                    │
                    ▼
┌─────────────────────────────────────┐
│       Desired arrival time reached    │ ── 404
└─────────────────────────────────────┘
```

Fig. 5

Fig. 6

Europäisches
Patentamt

European
Patent Office

Office européen
des brevets

# EUROPEAN SEARCH REPORT

Application Number

EP 19 27 5124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/092785 A1 (TOURNES CHRISTIAN H [US] ET AL) 18 April 2013 (2013-04-18) * paragraph [0118] - paragraph [0134] * ----- | 1-7 | INV. G05D1/10 G05D1/12 F41G3/00 |
| A | WO 2008/039226 A2 (RAYTHEON CO [US]; LAM FRANK C [US]; CHIANG GERALD C [US]) 3 April 2008 (2008-04-03) * paragraph [0017] - paragraph [0024] * ----- | 1-7 | |
| A | US 5 435 503 A (JOHNSON JR MALVIN G [US] ET AL) 25 July 1995 (1995-07-25) * column 25, line 62 - column 28, line 45 * ----- | 1-7 | |

TECHNICAL FIELDS
SEARCHED    (IPC)

G05D
F41G

~~The present search report has been drawn up for all claims~~

| Place of search | Date of completion of the search | Examiner |
|---|---|---|
| Munich | 6 February 2020 | Thomann, Jérôme |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

Europäisches
Patentamt

European
Patent Office

Office européen
des brevets

Application Number

EP 19 27 5124

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 19 27 5124

The Search Division considers that the present European patent application does not comply with the
requirements of unity of invention and relates to several inventions or groups of inventions, namely:

1. claims: 1-7

   the special technical features of claims 1-7 are aimed at
   controlling one self-propelled flying device so that it
   reaches a target at a desired arrival time (see description,
   p. 1, l. 6-8)
   ---

2. claims: 8-15

   the special technical features of claims 8-15 are aimed at
   controlling multiple missiles so as to maximise their
   combined effect (see description, p. 1, l. 14-16)
   ---

## ANNEX TO THE EUROPEAN SEARCH REPORT
## ON EUROPEAN PATENT APPLICATION NO.

EP 19 27 5124

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2020

| Patent document cited in search report | | Publication date | Patent family member(s) | | Publication date |
|---|---|---|---|---|---|
| US 2013092785 | A1 | 18-04-2013 | NONE | | |
| WO 2008039226 | A2 | 03-04-2008 | EP | 1999528 A2 | 10-12-2008 |
| | | | US | 2009127377 A1 | 21-05-2009 |
| | | | WO | 2008039226 A2 | 03-04-2008 |
| US 5435503 | A | 25-07-1995 | NONE | | |

EPO FORM P0459

For more details about this annex : see Official Journal of the European Patent Office, No. 12/82

**EP 3 822 733 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ZHAO S et al.** Cooperative Guidance for Multimissile Salvo Attack. *Chinese Journal of Aeronautics,* December 2008
- **LI Z et al.** Robust Cooperative Guidance Law for Simultaneous Arrival. *IEEE Transactions on Control Systems Technology,* May 2019
- **ZHAO Q et al.** Distributed cooperative guidance for multiple missiles with fixed and switching communication topologies. *Chinese Journal of Aeronautics,* August 2017
- **ZHAO J et al.** Three-dimensional cooperative guidance laws against stationary and maneuvering targets. *Chinese Journal of Aeronautics,* August 2015
- **WEI X et al.** A Three-Dimensional Cooperative Guidance Law of Multimissile System. *International Journal of Aerospace Engineering,* September 2015